# EUROPÄISCHE PATENTSCHRIFT

(11) **EP 0 844 138 B1**
(45) Veröffentlichungstag und Bekanntmachung des Hinweises auf die Patenterteilung: **12.04.2000**
(21) Anmeldenummer: 97120529.9
(22) Anmeldetag: 22.11.1997
(51) Int. Cl.: B60R 7/10, B60N 2/48, A47C 7/64

(54) **Haltevorrichtung, insbesondere Kleiderhalter**
Holding device, especially coat hook
Dispositif de support, en particulier une patère

(30) Priorität: 25.11.1996 DE 29620392 U; 11.01.1997 DE 29700423 U
(43) Veröffentlichungstag der Anmeldung: 27.05.1998
(73) Patentinhaber: Meier, Rudolf, 27243 Harpstedt (DE)
(72) Erfinder: Meier, Rudolf, 27243 Harpstedt (DE)
(74) Vertreter: Möller, Friedrich, Dipl.-Ing.

(56) Entgegenhaltungen:
- WO-A-93/25411
- WO-A-97/03864
- DE-A- 19 544 267
- US-A- 5 058 790
- US-A- 5 383 588

## Beschreibung

Die Erfindung betrifft eine Haltevorrichtung gemäß dem Oberbegriff des Anspruchs 1.

Haltevorrichtungen der hier angesprochenen Art dienen zur faltenfreien Aufhängung von Kleidungsstücken. Häufig führt gerade das Sitzen mit Jacke oder dergleichen in einem Fahrzeug zur Faltenbildung derselben. Um die ausgezogene Jacke oder dergleichen im Fahrzeug aufzuhängen, sind bereits verschiedenste Aufhängungsmöglichkeiten bekannt.

Eine aus der WO 93 25 411 A1 bekannte Haltevorrichtung der genannten Art weist ein Aufnahmeelement zur Aufnahme eines Kleidungsstücks auf. Das Aufnahmeelement ist durch Befestigungsmittel lösbar an Kopfstützhalterungen eines Fahrzeugsitzes befestigbar. Dazu sind die Befestigungsmittel in Führungen eines Abstützelements am Aufnahmeelement verschiebbar. Der Anbau dieser bekannten Haltevorrichtung erfordert ein entgegengesetztes Verschieben der beiden Befestigungsmittel in der Führung und eine anschließende Arretierung der Befestigungsmittel gegenüber der Führung. Diese Art der Befestigung der Haltevorrichtung am Fahrzeugsitz ist ebenso aufwendig wie die Gestaltung der Haltevorrichtung.

Der Erfindung liegt demnach die Aufgabe zugrunde, eine einfach aufgebaute Haltevorrichtung zu schaffen, die einfach montierbar und demontierbar ist.

Zur Lösung der Aufgabe weist die Erfindung die Merkmale des Anspruchs 1 auf. Dadurch, daß die Haltevorrichtung Federeigenschaften aufweist, ist sie durch Veränderung des Abstandes der Befestigungsmittel an unterschiedliche Abstände der Kopfstützhalterungen anpaßbar. Dadurch, daß der Abstand der Befestigungsmittel federnd veränderbar ist, kann die Haltevorrichtung einfach an Kopfstützhalterungen befestigt und gelöst werden. Durch Federkraft werden die Befestigungsmittel dann gegen die Kopfstützhalterungen gedrückt und dadurch die Haltevorrichtung selbsttätig arretiert. Eine separate Arretierung der Haltemittel erübrigt sich dadurch.

In einer vorteilhaften Ausgestaltung der Erfindung ist mindestens ein Teil der Haltevorrichtung, vorzugsweise das Aufnahmeelement, federnd ausgebildet. Dies ermöglicht das Zusammendrücken oder Auseinanderdrücken der am Aufnahmeelement angeordneten Abstützelemente. Durch die Anordnung der Befestigungsmittel an den Abstützelementen wird der Abstand der Befestigungsmittel beim Zusammendrücken oder Auseinanderdrücken der Abstützelemente federnd verändert. Durch die Federkraft des Trägerelementes und/oder der Abstützelemente ist die Haltevorrichtung an den Kopfstützhalterungen einfach und zuverlässig fixierbar. Zum einem besteht die Möglichkeit, daß die Federwirkung nach außen wirkt, derart, daß die Abstützelemente zusammendrückbar sind zur Verringerung des Abstandes der Befestigungsmittel und zwischen den Kopfstützhalterungen liegend gegen diese drücken. Zum anderen kann die Federkraft aber auch nach innen wirken, derart, daß die Abstützelemente auseinanderdrückbar sind und von außen gegen die Kopfstützhalterungen gedrückt werden. Die Haltevorrichtung ist dadurch mit einem Handgriff ein- bzw. ausbaubar. Die federnde Ausgestaltung des Aufnahmeelementes und/oder der Abstützelemente hat weiterhin den Vorteil, daß die Haltevorrichtung an unterschiedliche Abstände der Kopfstützhalterungen anpaßbar und gleichzeitig arretierbar ist und sich somit für unterschiedliche Fahrzeugtypen verwenden läßt.

In einer bevorzugten Weiterbildung der Erfindung ist dem Aufnahmeelement mindestens ein Trägerelement zur Bildung des Mittels zur Aufnahme wenigstens eines Kleidungsstücks zugeordnet. Das Trägerelement dient zur Aufnahme von Kleidungsstücken, die ohne einen separaten Kleiderbügel transportiert werden.

In einem weiteren Ausführungsbeispiel der Erfindung weist das Aufnahmeelement mindestens eine das Mittel zur Aufnahme wenigstens eines Kleidungsstücks bildende Aufhängeeinrichtung (Vorsprung und/oder Ausnehmung) auf. An die Aufhängeeinrichtung sind Kleidungsstücke, die auf einem separaten Kleiderbügel angeordnet sind, mit dem Kleiderbügel aufhängbar und somit ebenfalls faltenfrei zu transportieren.

Bei einer bevorzugten Weiterbildung der Erfindung ist den Abstützelementen jeweils ein Befestigungsmittel zugeordnet, das mindestens teilweise verdrehbar ist. Durch die drehbare Ausbildung der Befestigungsmittel ist die Haltevorrichtung mit dem Aufnahmeelement unabhängig vom Abstand der Kopfstützhalterungen stets so ausgerichtet, daß Kleidungsstücke frei hängend und faltenfrei hinter dem Fahrzeugsitz transportiert werden können.

Weitere Merkmale der Erfindung ergeben sich aus den Unteransprüchen und der Beschreibung.

Nachfolgend werden verschiedene bevorzugte Ausführungsbeispiele der Haltevorrichtung anhand der Zeichnung näher erläutert. In der Zeichnung zeigen:
- Fig. 1: eine Seitenansicht einer Haltevorrichtung in montiertem Zustand,
- Fig. 2: die Haltevorrichtung gemäß Fig. 1 im Schnitt II-II,
- Fig. 3: ein erstes Ausführungsbeispiel eines Befestigungsmittels im Schnitt III-III gemäß Fig. 2,
- Fig. 4: ein zweites Ausführungsbeispiel eines Befestigungsmittels,
- Fig. 5: ein drittes Ausführungsbeispiel eines Befestigungsmittels,
- Fig. 6: ein viertes Ausführungsbeispiel eines Befestigungsmittels,
- Fig. 7: eine Vorderansicht einer weiteren Haltevorrichtung in montiertem Zustand,
- Fig. 8: ein Befestigungsmittel zur Fixierung der Haltevorrichtung gemäß Fig. 7,
- Fig. 9: eine Vorderansicht einer weiteren Haltevorrichtung,
- Fig. 10: eine Vorderansicht einer weiteren Haltevorrichtung in montiertem Zustand,
- Fig. 11: eine Seitenansicht einer weiteren Haltevorrichtung in montiertem Zustand,
- Fig. 12: die Haltevorrichtung gemäß Fig. 11 im Schnitt XII-XII,

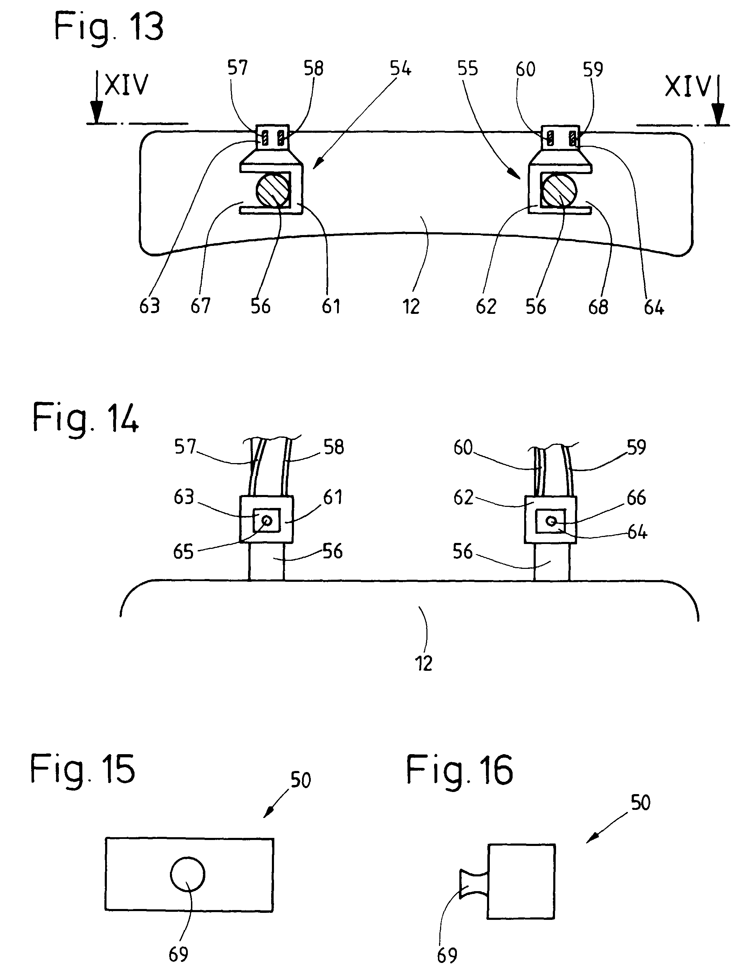

- Fig. 13: ein Befestigungsmittel zur Fixierung der Haltevorrichtung gemäß Fig. 12,
- Fig. 14: einen Ausschnitt der Haltevorrichtung gemäß Fig. 13 im Schnitt XIV-XIV,
- Fig. 15: eine Vorderansicht eines Ausführungsbeispiels eines Aufnahmeelementes, und
- Fig. 16: eine Seitenansicht des Aufnahmeelementes gemäß Fig. 15.

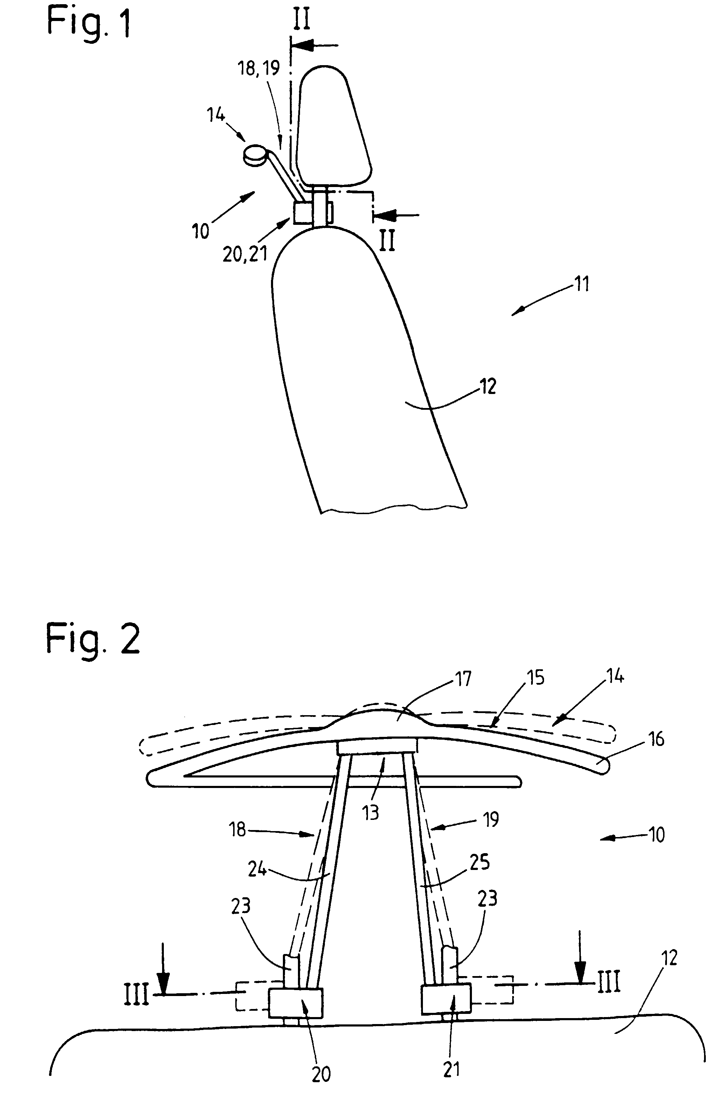

Eine Haltevorrichtung 10 gemäß der Fig. 1 dient zur faltenfreien Aufhängung von Kleidungsstücken, insbesondere von Jakken, Jacketts, Hosen oder dergleichen, in einem Auto oder einem anderen Fahrzeug. Dabei ist die Haltevorrichtung 10 im Bereich eines Fahrzeugsitzes 11 angeordnet, und zwar so, daß die Kleidungsstücke hinter einer Rückenlehne 12 des Fahrzeugsitzes 11 frei hängend angeordnet sind.

Die Haltevorrichtung 10 weist ein Aufnahmeelement 13 auf. Im Ausführungsbeispiel gemäß Fig. 1 ist dem Aufnahmeelement 13 ein Mittel, insbesondere ein Trägerelement 14, zugeordnet, das zur Aufnahme wenigstens eines Kleidungsstücks dient. Es ist aber auch denkbar, daß die Haltevorrichtung 10 mehrere Trägerelemente 14 aufweist. Das Trägerelement 14 ist einstückig mit dem Aufnahmeelement 13 ausgebildet. Es ist aber auch denkbar, daß das Trägerelement 14 ein separates Teil ist und/oder aus mehreren Teilen besteht und in das Aufnahmeelement 13 einsteckbar ist. Das Trägerelement 14 ist nach der Art eines Kleiderbügels ausgebildet. Dazu besteht es im wesentlichen aus einem an die Form des Kleidungsstücks angepaßten, nahezu horizontal verlaufenden Querholm 15, auf dem das jeweilige Kleidungsstück aufhängbar ist. Der Querholm 15 weist seinerseits einen Stützabschnitt 16 für einen Jackenkragen und einen Stützabschnitt 17 für Schulterabschnitte auf.

Dem Trägerelement 14 sind zwei Abstützelemente 18, 19 zugeordnet. Die Abstützelemente 18, 19 sind im gezeigten Ausführungsbeispiel lösbar am Querholm 15 angeordnet. Die Abstützelemente 18, 19 sind mit dem Aufnahmeelement 13 verbunden. Die Abstützelemente 18, 19 können einstückig mit dem Aufnahmeelement 13 verbunden sein. In einem unteren, von dem Querholm 15 abgewandten Bereich der Abstützelemente 18, 19 sind diesen Befestigungsmittel 20, 21 zugeordnet. Die mit den Abstützelementen 18, 19 verbundenen, separaten Befestigungsmittel 20, 21 weisen Aufnahmen 22 auf, in die wiederum die Abstützelemente 18, 19 einsteckbar sind. Mit den Befestigungsmitteln 20, 21 ist die Haltevorrichtung 10 an Kopfstützhalterungen 23 fixierbar.

Die Abstützelemente 18, 19 sind als Stangen 24, 25 ausgebildet. Die Stangen 24, 25 können beliebige Querschnitte (rund oder unrund, zum Beispiel rechteckig) aufweisen.

Die Stangen 24, 25 verlaufen ausgehend vom Aufnahmeelement 13 leicht divergierend.

Mindestens das Aufnahmeelement 13 ist federnd ausgebildet. Dadurch sind die daran angeordneten Stangen 24, 25 elastisch zusammendrückbar. Gegebenenfalls können auch nur die Abstützelemente 18, 19, insbesondere die Stangen 24, 25 federnd ausgebildet sein. Auch ist es denkbar, sowohl die Abstützelemente 18 bzw. die Stangen 24, 25 als auch das Aufnahmeelement 13 federnd bzw. elastisch verformbar auszubilden. Dann ist praktisch die gesamte Haltevorrichtung 10 federnd bzw. elastisch verformbar. Ein solches größtenteils federnd verformbares Haltemittel 10 ist besonders vorteilhaft, wenn das Aufnahmeelement 13 und die Abstützelemente 18, 19 bzw. Stangen 24, 25 einstückig aus dem gleichen Material, zum Beispiel Federstahl, gebildet ist, vorzugsweise durch entsprechendes Biegen eines stabförmigen Materialstrangs (Halbzeug). Das Biegen der Haltevorrichtung erfolgt derart, daß im wesentlichen nur Teile des Aufnahmeelements 13 bzw. der Trägerelemente 14 elastisch verformt werden, zur Montage bzw. Demontage der Haltevorrichtung und der dazu erforderlichen Veränderung des Abstands der Befestigungsmittel 20, 21. Des weiteren ist die Haltevorrichtung 10 so gebogen, daß in ihrem montierten Zustand durch Federvorspannung im Aufnahmeelement 13 und/oder in den Abstützelementen 18, 19 bzw. Stangen 24, 25 die Befestigungsmittel 20, 21 permanent gegen die Kopfstützhalterungen 23 gedrückt werden, und zwar in entgegengesetzten Richtungen.

Im entspannten Zustand der federnden Haltevorrichtung 10 (gestrichelte Darstellung in Fig. 2) ist der Abstand der an den freien unteren Enden der Stangen 24, 25 angeordneten Befestigungsmittel 20, 21 größer als der Abstand der Kopfstützhalterungen 23. Für den Einbau der Haltevorrichtung 10 sind die Stangen 24, 25 zusammendrückbar, derart, daß die Befestigungsmittel 20, 21 zwischen die Kopfstützhalterungen 23 bringbar sind. Nach dem Loslassen der Stangen 24, 25 drückt die Federkraft die Befestigungsmittel 20, 21 von innen gegen die Kopfstützhalterungen 23. Hierzu sind die Befestigungsmittel 20, 21 als einseitig offene Klemmorgane 26 ausgebildet. Die beispielsweise V-förmig ausgebildeten Klemmorgane 26 sind mit ihrem offenen Bereich jeweils in Richtung der Kopfstützhalterungen 23 gerichtet. Durch die V-förmige Ausbildung der Klemmorgane 26 ist die Haltevorrichtung 10 unabhängig vom Durchmesser der Kopfstützhalterungen 23 an diesen fixierbar. Die federnde Eigenschaft des Aufnahmeelementes 13 und/oder der Stangen 24, 25 bewirkt, daß die Haltevorrichtung 10 an unterschiedliche Abstände der Kopfstützhalterungen 23 anpaßbar und hieran arretierbar ist. Weisen die Befestigungsmittel 20, 21 an den unteren Enden der Stangen 24, 25 alternativ einen Abstand auf, der kleiner ist als der Abstand der Kopfstützhalterungen 23, sind die Stangen bei der Montage zur Vergrößerung des Abstands der Befestigungsmittel 20, 21 mit ihren Endbereichen auseinanderzudrücken. Nach dem Loslassen der Stangen 24, 25 drückt die Federkraft der elastischen Haltevorrichtung 10 die Befestigungsmittel 20, 21 zusammen, derart, daß sie von außen gegen die Kopfstützhalterungen 23 drücken.

Zur Verbesserung der Haftung bzw. der Halterung der Klemmorgane 26 an den Kopfstützhalterungen 23 sind die Klemmorgane 26 beispielsweise mit einer gewellten oder geriffelten Oberfläche versehen. Alternativ ist es auch denkbar, die Klemmorgane 26 an einer Kontaktfläche zu den Kopfstützhalterungen 23 mit einer rutschhemmenden Schicht oder Beschichtung aus z.B. Gummi zu versehen. Die dadurch erreichte Erhöhung des Reibkoeffizienten zwischen Klemmorgan 26 und Kopfstützhalterung 23 führt ebenfalls zu einer erhöhten Sicherheit gegen Verrutschen.

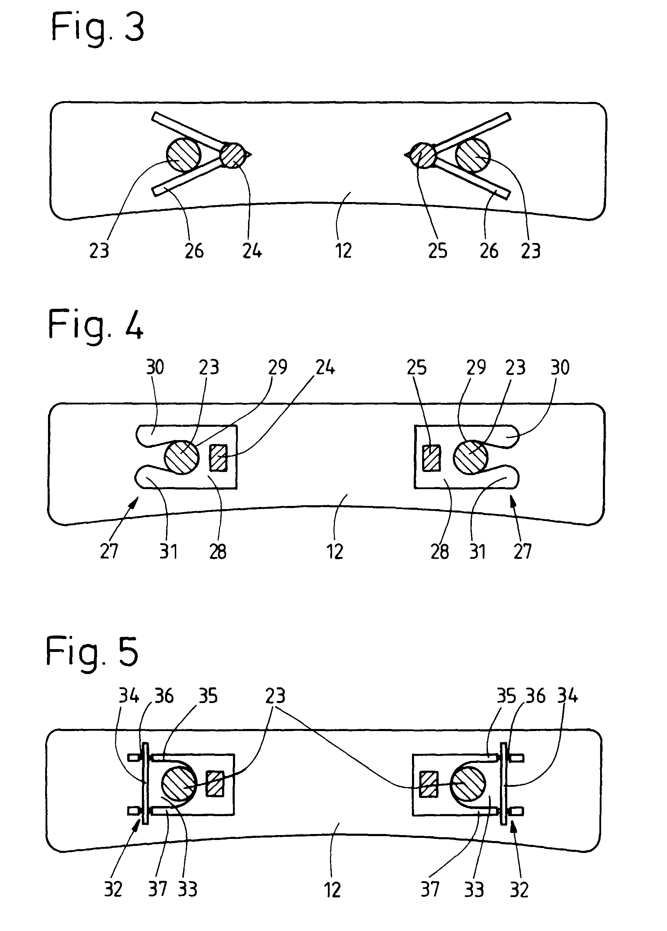

In einem weiteren Ausführungsbeispiel ist den Befestigungsmitteln 20, 21 ein Verriegelungselement 27 zugeordnet (Fig. 4). Die Befestigungsmittel 20, 21 weisen einen Grundkörper 28 mit einer geschlitzten Bohrung 29 auf. Zwei die Bohrung 29 umschließende Stege 30, 31 sind durch Druck auseinanderbiegbar und bilden so einen Schnappverschluß. Die Stege 30, 31 sind in montiertem Zustand eng an den Kopfstützhalterungen 23 anliegend, zur Aufbringung einer Haltekraft.

Ein in Fig. 5 dargestelltes Verriegelungselement 32 ist U-förmig ausgebildet, wobei eine Ausnehmung 33 mindestens den Durchmesser der Kopfstützhalterungen 23 aufweist. Die Kopfstützhalterungen 23 sind in die Ausnehmungen 33 einklinkbar und anschließend durch einen Riegel 34 verschließbar. Bei dem Riegel 34 kann es sich um Bolzen, Spangen oder dergleichen handeln. Diese Art der Befestigung kann insbesondere auch dann gewählt werden, wenn die Stangen 24, 25 und/oder das Trägerelement 13 nicht federnd, sondern frei bewegbar sind. Der Riegel 34 verhindert das Lösen der Haltevorrichtung 10 von den Kopfstützhalterungen 23. Im vorliegenden Ausführungsbeispiel ist der Riegel 34 an einem Steg 35 schwenkbar gelagert. Der Riegel 34 weist auf der einem Drehpunkt 36 gegenüberliegenden Seite eine Ausnehmung auf, mit der der Riegel 34 an einem dem Steg 35 gegenüberliegenden Steg 37 einhakbar ist. Der Riegel 34 ist so zum Öffnen und Schließen um den Drehpunkt 36 verschwenkbar.

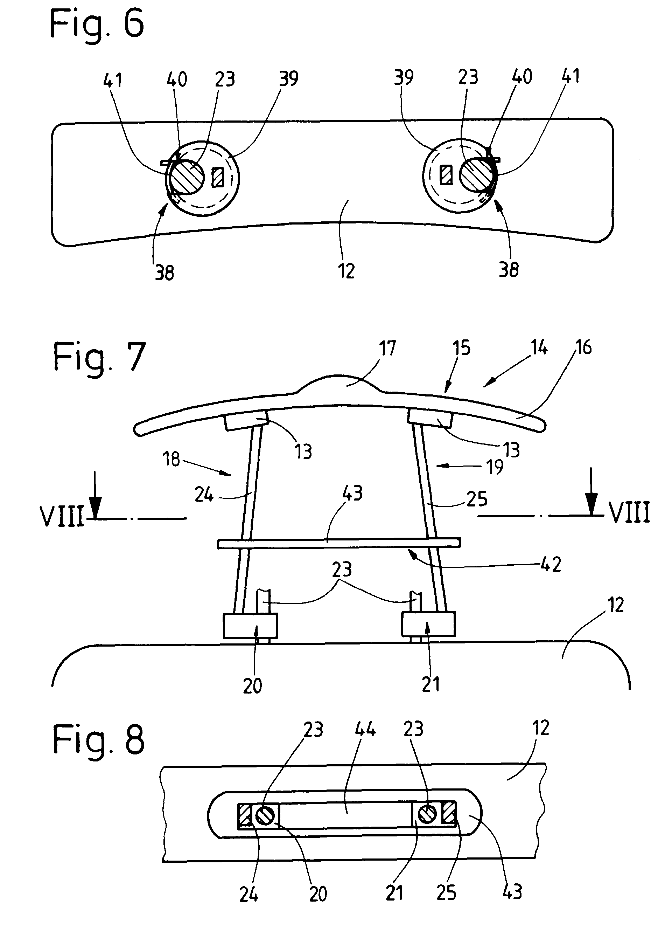

In einem alternativen Beispiel gemäß der Fig. 6 ist ein Verriegelungselement 38 etwa kreisförmig ausgebildet und weist eine umlaufende Nut 39 auf. Auf der den Kopfstützhalterungen 23 zugewandten Seite des Verriegelungselementes 38 sind jeweils U-förmige Ausnehmungen 40 angeordnet, die ebenfalls im Durchmesser mindestens so groß sind wie der Durchmesser der Kopfstützhalterungen 23. Innerhalb der Nut 39 ist ein Schiebeelement 41 angeordnet, daß nach dem Einklinken der Haltevorrichtung 10 an die Kopfstützhalterungen 23 verdreht wird. Dadurch wird die Ausnehmung 40 geschlossen, so daß das unfreiwillige Lösen der Haltevorrichtung 10 von den Kopfstützhalterungen 23 verhindert ist.

Ein weiteres Beispiel einer Haltevorrichtung 10 geht aus der Fig. 7 hervor. Die Stangen 24, 25, die in diesem Ausführungsbeispiel nicht federnd sein müssen, verlaufen hier vom Querholm 14 ausgehend leicht divergierend. Die an freien Enden der Stangen 24, 25 angeordneten Befestigungsmittel 20, 21 greifen von außen an den Kopfstützhalterungen 23 an. Als Befestigungsmittel 20, 21 dienen ebenfalls die beschriebenen Alternativen gemäß der Fig. 3 bis 6. Den Stangen 24, 25 kann ein zusätzliches Verriegelungselement 42 zugeordnet sein. Bei federnd am Aufnahmeelement 13 angeordneten Stangen 24, 25 dient es zur zusätzlichen Sicherung. Bei frei bewegbaren Stangen 24, 25 dient das Verriegelungselement 42 als selbsthemmende Sicherung. Das Verriegelungselement 42 besteht aus einer dünnen Platte 43, die mittig ein Langloch 44 aufweist. Das Langloch 44 erstreckt sich nahezu über die gesamte Breite der Platte 43. Das Verriegelungselement 42 ist vor der Befestigung der Stangen 24, 25 am Querholm 14 auf die Stange 24, 25 aufsteckbar. Der maximale Abstand der Stangen 24, 25 im Bereich der Befestigungsmittel 20, 21 ist größer als im Verbindungsbereich mit dem Querholm 15. Die Breite des Langlochs 43 entspricht in etwa dem Abstand der Stangen 24, 25 im Bereich des Querholms 15. Durch Herunterschieben der Platte 43 werden die Stangen 24, 25 zusammengedrückt, insbesondere im Bereich der Befestigungsmittel 20, 21, so daß die Haltevorrichtung 10 durch Selbsthemmung an den Kopfstützhalterungen 23 befestigt ist. Zum Lösen der Haltevorrichtung 10 ist das Verriegelungselement 42 in einfacher Weise nach oben verschiebbar, so daß die Stangen 24, 25 auseinanderbewegbar sind.

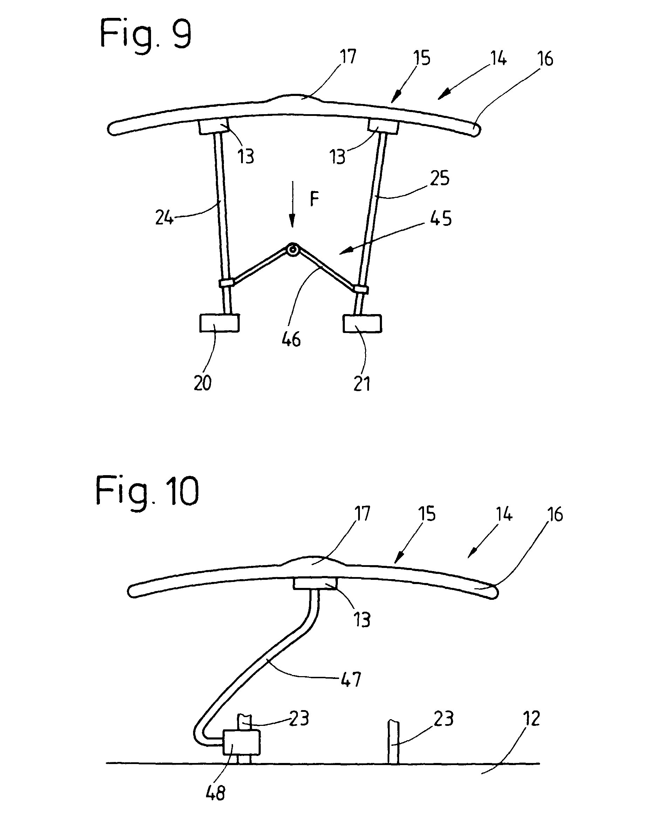

In einem weiteren Ausführungsbeispiel einer Haltevorrichtung 10 sind die Stangen 24, 25 vom Querholm 14 ausgehend konvergierend angeordnet (Fig. 9). Zwischen den Stangen 24, 25, die auch in diesem Ausführungsbeispiel nicht federnd sein müssen, ist ein Verriegelungselement 45, insbesondere ein Kniehebelgelenk 46 angeordnet. Die Befestigungsmittel 20, 21, die zunächst zwischen den Kopfstützhalterungen 23 positioniert werden, sind durch Betätigung des Kniehebelgelenks 46 nach außen, nämlich gegen die Kopfstützhalterungen 23 drückbar, so daß die Haltevorrichtung 10 fest, aber lösbar, am Fahrzeugsitz 11 befestigt ist.

In einem weiteren Ausführungsbeispiel einer Haltevorrichtung 10 gemäß Fig. 10 ist dem Querholm 15 nur eine einzelne Stange 47 zugeordnet. Die vorzugsweise mittig am Querholm 15 angeordnete Stange 47 ist mit einer einzelnen Kopfstützhalterung 23 verbindbar. Der Stange 47 ist auf der dem Querholm 15 abgewandten Seite ein Verschluß 48 zugeordnet. Der Verschluß 48 kann durch Schrauben, Klappbügel oder dergleichen am Kopfstützhalter 23 befestigt sein, zur festen Verbindung an demselben.

Der Querholm 15 besteht vorzugsweise aus Kunststoff. Die Befestigungsmittel 20, 21 sind ebenfalls bevorzugt aus Kunststoff gefertigt. Die Abstützelemente 18, 19 sind bevorzugt aus Metall gefertigt, wobei das Metall, insbesondere der Stangen 24, 25, federnde Eigenschaften aufweisen kann.

In einem nicht gezeigten Ausführungsbeispiel besteht die Haltevorrichtung vollständig aus Metall. Die einteilig ausgebildete Haltevorrichtung ist aus einem Draht gebogen. Der Draht erstreckt sich zur Bildung des Trägerelements mit einem durchgehenden Holm nahezu parallel zur Rückenlehne des Fahrersitzes. Zu beiden Seiten des durchgehenden Holms ist der Draht zurückgebogen und verläuft annähernd parallel zu diesem. Die umgebogenen Enden des Drahtes enden mit einem Abstand voneinander. An die Enden schließen sich einstückig die vorzugsweise wiederum stangenartigen Abstützelemente an, die ausgehend vom Aufnahmeelement leicht divergierend verlaufen. In einem unteren Bereich der Abstützelemente sind die Befestigungsmittel angeordnet, vorzugsweise als separate Teile, die gegenüber den Abstützelementen bzw. den Enden derselben, auf denen sie angeordnet sind, verdrehbar sind.

Diese Haltevorrichtung weist gute Federeigenschaften auf, weil sowohl das Aufnahmeelement als auch die Abstützelemente federnd wirken, so daß die Abstützelemente besonders einfach zusammendrückbar und nach dem Loslassen durch die Federkraft des Drahtes mit ausreichender Federkraft gegen die Kopfstützhalterungen drücken.

Bei den bisher beschriebenen Ausführungsbeispielen weisen die Haltevorrichtungen 10 das Aufnahmeelement 13 auf, dem ein Trägerelement 14 zugeordnet ist, so daß Kleidungsstücke oder dergleichen direkt auf der Haltevorrichtung 10 aufgehängt werden können. Es ist alternativ aber auch denkbar, daß die Kleidungsstücke auf einem separaten Kleiderbügel aufhängbar sind, so daß das Aufnahmeelement 13 kein Trägerelement 14 aufzuweisen braucht.

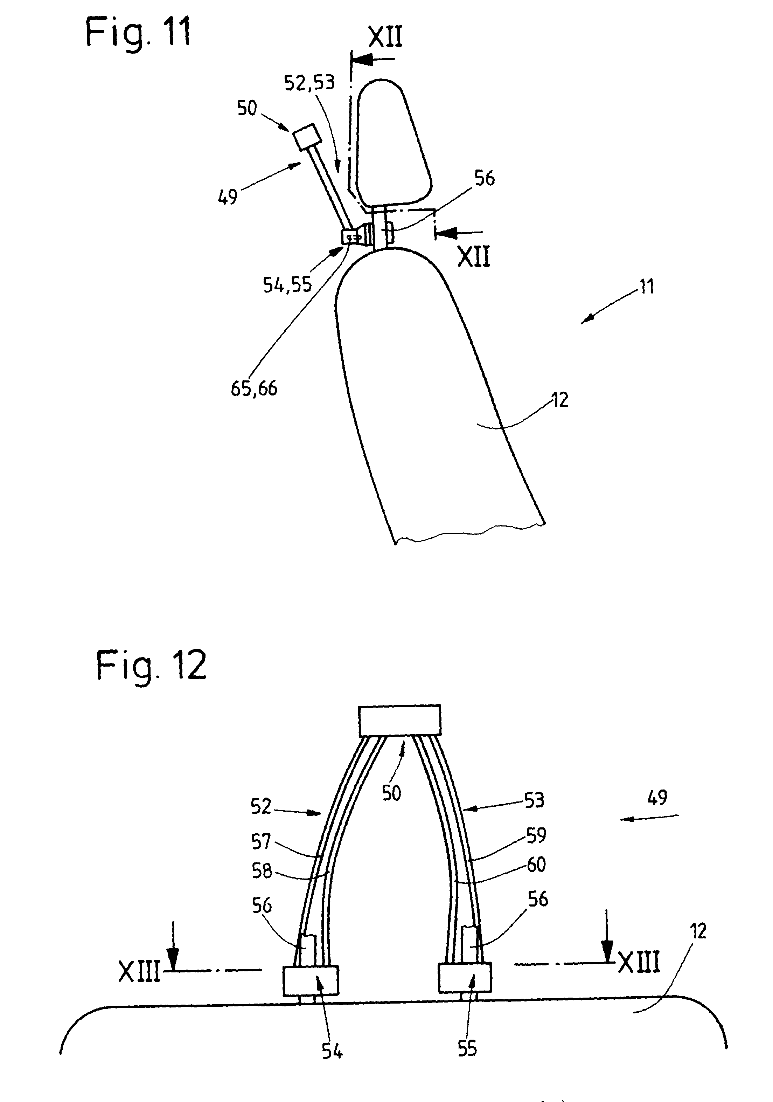

Fig. 11 zeigt eine Haltevorrichtung 49 mit einem Aufnahmeelement 50, das mindestens eine das Mittel zur Aufnahme wenigstens eines Kleidungsstücks bildende Aufhängeeinrichtung 51 aufweist. Die Haltevorrichtung 49 dient zur faltenfreien Aufhängung von Kleidungsstücken, insbesondere von Jacken, Jacketts, Hosen oder dergleichen, die auf einem separaten Kleiderbügel, Hosenhalter oder dergleichen aufgehängt sind.

Die Haltevorrichtung 49 weist das Aufnahmeelement 50 auf, an dem zwei Abstützelemente 52, 53 verdrehsicher und lösbar angeordnet sind. Den Abstützelementen 52, 53 sind in einem unteren, von dem Aufnahmeelement 50 abgewandten Bereich, Befestigungsmittel 54, 55 zugeordnet, die ebenfalls verdrehsicher und lösbar mit den Abstützelementen 52, 53 verbunden sind. Mit den Befestigungsmitteln 54, 55 ist die Haltevorrichtung 49 an Kopfstützhalterungen 56 fixierbar.

Die Abstützelemente 52, 53 bestehen jeweils aus zwei mit Abstand voneinander angeordneten Flachmaterialstreifen 57, 58 bzw. 59, 60. Im entspannten Zustand, d.h. in nicht montiertem Zustand, verlaufen die Flachmaterialstreifen 57, 58 und 59, 60 jeweils etwa parallel zueinander. Die durch die in das Aufnahmeelement 50 und die Befestigungsmittel 52, 53 eingesteckten Flachmaterialstreifen 57..60 gebildeten Abstützelemente 52, 53 verlaufen von dem Aufnahmeelement 50 ausgehend leicht konvergierend. Die Flachmaterialstreifen 57..60 verlaufen mit ihrer breiten Seite quer zur Rückenlehne 12 des Fahrzeugsitzes 11.

Die vorzugsweise aus Kunststoff gefertigten Befestigungsmittel 54, 55 bestehen jeweils aus zwei Teilen, nämlich einem Grundkörper 61 bzw. 62 und einem Halteelement 63 bzw. 64. Die Flachmaterialstreifen 57..60 sind in die Halteelemente 63 bzw. 64 einsteckbar. Die Halteelemente 63, 64 sind jeweils auf einer Welle 65, 66 angeordnet. Beim Ausführungsbeispiel gemäß der Fig. 11 sind die Halteelemente 63, 64 auf freien Enden der Wellen 65, 66 aufgesteckt und gegen Verdrehen gesichert. Mit den gegenüber den in den Halteelementen 63, 64 eingebetteten Enden der Wellen 65, 66 liegenden freien Enden sind die Wellen 65, 66 in dem Grundkörper 61, 62 drehbar gelagert. Die Halteelemente 63, 64 sind somit gegenüber den fest an den Kopfstützhalterungen 56 fixierbaren Grundkörpern 61, 62 drehbar gelagert. Alternativ ist es aber auch denkbar, daß die Wellen 65, 66 fest in den Grundkörpern 61, 62 und drehbar in den Halteelementen 63, 64 angeordnet sind.

Die Flachmaterialstreifen 57..60 bestehen im gezeigten Ausführungsbeispiel gemäß Fig. 11 aus einem Material, das selbst keine wesentlichen Federeigenschaften aufweist, beispielsweise Aluminium. Die Federkraft ensteht dann durch eine unterschiedliche Biegung und eine daraus resultierende Vorspannung der beiden jeweils in geringem Abstand voneinander angeordneten Flachmaterialstreifen 57, 58 bzw. 59, 60. Die einander zugekehrten, jeweils innenliegenden Flachmaterialstreifen 58, 60 des jeweiligen Abstützelements 52, 53 werden durch das Zusammendrücken der Abstützelemente 52, 53 im Bereich der Befestigungsmittel 54, 55 stärker gebogen. Es ist jedoch auch denkbar, daß die Flachmaterialstreifen 57..60 selbst aus einem Federstahl bestehen. Dies erhöht die Federkraft der Abstützelemente 52, 53, so daß die Haltevorrichtung 49 noch besser an den Kopfstützhalterungen 56 fixierbar ist. Die Abstützelemente 52, 53 können demnach aus einem Federstahl sein, müssen es jedoch nicht.

Die Grundkörper 61, 62, mit denen die Haltevorrichtung 49 an den Kopfstützhalterungen 56 fixierbar ist, weisen jeweils eine Nut 67, 68 auf. Die Breite der Nuten 67, 68 ist geringfügig größer als der Durchmesser der Kopfstützhalterung 56, so daß die Grundkörper 61, 62 leicht auf die Kopfstützhalterungen 56 aufsteckbar sind. Zum Einhängen der Haltevorrichtung 49 sind die Abstützelemente 52, 53 zusammendrückbar, derart, daß die Grundkörper 61, 62 zwischen den Kopfstützhalterungen 56 positionierbar sind. Nach der Entlastung der Aufstützelemente 52, 53 werden die Grundkörper 61, 62 durch die mit einem Abstand voneinander angeordneten Flachmaterialstreifen 57..60 und/oder durch die Federkraft der aus Federstahl bestehenden Flachmaterialstreifen 57..60 von innen gegen die Kopfstützhalterung 56 gedrückt. Zur zusätzlichen Sicherung der Haltevorrichtung 49 sind insbesondere alle bereits in den Fig. 3 bis 6 beschriebenen Befestigungsmittel denkbar.

Beim Aufnahmeelement 50 der Haltevorrichtung 49 ist das Mittel zur Aufnahme mindestens eines Kleidungsstücks als Aufhängeeinrichtung 51, vorzugsweise als Vorsprung 69 ausgebildet. Bei dem hier dargestellten Ausführungsbeispiel ist der Vorsprung 69 einstückig mit dem Aufnahmeelement 50 ausgebildet. Es ist alternativ auch denkbar, daß mehrere Vorsprünge 69 aus separaten Teilen lösbar am Aufnahmeelement 50 befestigt sind. An die Vorsprünge 69 sind nicht dargestellte Kleiderbügel oder dergleichen mit den daran aufgehängten Kleidungsstücken aufhängbar. Alternativ oder kumulativ kann das Aufnahmeelement 50 auch Ausnehmungen als Mittel zur Aufnahme mindestens eines Kleidungsstücks aufweisen, in die die Kleiderbügel einhängbar sind.

In den vorliegenden Ausführungsbeispielen sind nur einige der möglichen Anordnungen und Befestigungsmöglichkeiten sowie Kombinationen von Aufnahmeelementen, Abstützelementen und Befestigungsmitteln aufgezeigt. Es sind jedoch beliebige Ausführungsbeispiele möglich. Es sind auch Verschlüsse bzw. Befestigungsmittel in jeglicher Form vorstellbar. Auch unterschiedliche Materialzusammenstellungen sind möglich.

### Bezugszeichenliste:

- 10: Haltevorrichtung
- 11: Fahrzeugsitz
- 12: Rückenlehne
- 13: Aufnahmeelement
- 14: Trägerelement
- 15: Querholm
- 16: Stützabschnitt
- 17: Stützabschnitt
- 18: Abstützelement
- 19: Abstützelement
- 20: Befestigungsmittel
- 21: Befestigungsmittel
- 22: Aufnahme
- 23: Kopfstützhalterung
- 24: Stange
- 25: Stange
- 26: Klemmorgan
- 27: Verriegelungselement
- 28: Grundkörper
- 29: Bohrung
- 30: Steg
- 31: Steg
- 32: Verriegelungselement
- 33: Ausnehmung
- 34: Riegel
- 35: Steg
- 36: Drehpunkt
- 37: Steg
- 38: Verriegelungselement
- 39: Nut
- 40: Ausnehmung
- 41: Schiebeelement
- 42: Verriegelungselement
- 43: Platte
- 44: Langloch
- 45: Verriegelungselement
- 46: Kniehebelgelenk
- 47: Stange
- 48: Verschluß
- 49: Haltevorrichtung
- 50: Aufnahmeelement
- 51: Aufhängeinrichtung
- 52: Abstützelement
- 53: Abstützelement
- 54: Befestigungsmittel
- 55: Befestigungsmittel
- 56: Kopfstützhalterung
- 57: Flachmaterialstreifen
- 58: Flachmaterialstreifen
- 59: Flachmaterialstreifen
- 60: Flachmaterialstreifen
- 61: Grundkörper
- 62: Grundkörper
- 63: Halteelement
- 64: Halteelement
- 65: Welle
- 66: Welle
- 67: Nut
- 68: Nut
- 69: Vorsprung

## Patentansprüche

1. Haltevorrichtung, insbesondere Kleiderhalter, mit einem Aufnahmeelement (13, 50), das mindestens ein Mittel zur Aufnahme wenigstens eines Kleidungsstücks oder dergleichen aufweist, und mit vorzugsweise zwei Abstützelementen (18, 19; 52, 53), denen zur Montage der Haltevorrichtung (10, 49) an einem Fahrzeugsitz jeweils ein zur lösbaren Befestigung an Kopfstützhalterungen (23, 56) von Fahrzeugsitzen (11) ausgebildetes Befestigungsmittel (20, 21; 54, 55) zugeordnet ist, **dadurch gekennzeichnet**, daß die Haltevorrichtung (10, 49) Federeigenschaften aufweist, derart, daß sie durch Veränderung des Abstandes der Befestigungsmittel (20,21;54,55) an unterschiedliche Abstände der Kopfstützhalterungen (23, 56) anpaßbar ist.

2. Haltevorrichtung nach Anspruch 1, dadurch gekennzeichnet, daß dem Aufnahmeelement (13, 50) mindestens ein Trägerelement (14) zur Bildung des Mittels zur Aufnahme wenigstens eines Kleidungsstücks zugeordnet ist, wobei vorzugsweise das oder jedes Trägerelement (14) einstückig mit dem Aufnahmeelement (13) ausgebildet ist.

3. Haltevorrichtung nach einem der vorhergehenden Ansprüche, dadurch gekennzeichnet, daß mindestens das Aufnahmeelement (13) und/oder die Abstützelemente (18, 19, 52, 53) federnd ausgebildet sind.

4. Haltevorrichtung nach einem der vorhergehenden Ansprüche, dadurch gekennzeichnet, daß der Abstand der Abstützelemente (18, 19, 52, 53) im Bereich der Befestigungsmittel (20, 21, 54, 55) in entspannter Position größer oder kleiner ist als der Abstand zwischen den Kopfstützhalterungen (23, 56) ist.

5. Haltevorrichtung nach einem der vorhergehenden Ansprüche, dadurch gekennzeichnet, daß die Befestigungsmittel (20, 21, 54, 55) durch Federkraft an den Kopfstützhalterungen (23, 56) fixierbar sind.

6. Haltevorrichtung nach einem der vorhergehenden Ansprüche, dadurch gekennzeichnet, daß die Abstützelemente (18, 19) und/oder die Befestigungsmittel (20, 21) durch die Federwirkung insbesondere des Aufnahmeelements (13) an unterschiedliche Abstände der Kopfstützhalterungen (23) anpaßbar sind.

7. Haltevorrichtung nach einem der vorhergehenden Ansprüche, dadurch gekennzeichnet, daß die Befestigungsmittel (54, 55) mindestens teilweise verdrehbar sind.

8. Haltevorrichtung nach einem der vorhergehenden Ansprüche, dadurch gekennzeichnet, daß die Befestigungsmittel (20, 21, 54, 55) als Schnappverschlüsse ausgebildet sind.

9. Haltevorrichtung nach einem der vorhergehenden Ansprüche, dadurch gekennzeichnet, daß die Befestigungsmittel (20, 21, 54, 55) als einseitig offene Klemmorgane (26) ausgebildet sind.

10. Haltevorrichtung nach einem der vorhergehenden Ansprüche, dadurch gekennzeichnet, daß das Aufnahmeelement mit den Trägerelementen und die Abstützelemente einstückig aus demselben federnden Material gebogen sind, wobei die Biegung derart erfolgt, daß sich im wesentlichen nur Teile des Aufnahmeelements bzw. der Trägerelemente zur Montage oder Demontage der Haltevorrichtung bzw. zur elastischen Veränderung des Abstandes der Befestigungsmittel elastisch verformen.

## Claims

1. Holding device, in particular clothes holder, having a receiving element (13, 50) which has at least one means for receiving at least one garment or the like, and having preferably two supporting elements (18, 19; 52, 53) which, in order for the holding device (10, 49) to be installed on a vehicle seat, are respectively assigned a fastening means (20, 21; 54, 55) which is designed to be releasably fastened to head-restraint mounts (23, 56) of vehicle seats (11), characterized in that the holding device (10, 49) exhibits spring properties in such a manner that a change in the spacing of the fastening means (20, 21; 54, 55) enables it to be adapted to different spacings between the head-restraint mounts (23, 56).

2. Holding device according to Claim 1, characterized in that the receiving element (13, 50) is assigned at least one carrier element (14) in order to form the means for receiving at least one garment, the or each carrier element (14) preferably being integrally formed together with the receiving element (13).

3. Holding device according to one of the preceding claims, characterized in that at least the receiving element (13) and/or the supporting elements (18, 19, 52, 53) are of resilient design.

4. Holding device according to one of the preceding claims, characterized in that the spacing between the supporting elements (18, 19, 52, 53) in an unstressed position is greater or smaller in the region of the fastening means (20, 21, 54, 55) than the spacing between the head-restraint mounts (23, 56).

5. Holding device according to one of the preceding claims, characterized in that the fastening means (20, 21, 54, 55) can be fixed to the head-restraint mounts (23, 56) by spring force.

6. Holding device according to one of the preceding claims, characterized in that the supporting elements (18, 19) and/or the fastening means (20, 21) can be adapted to different distances between the head-restraint mounts (23) by the spring action in particular of the receiving element (13).

7. Holding device according to one of the preceding claims, characterized in that the fastening means (54, 55) are at least partially rotatable.

8. Holding device according to one of the preceding claims, characterized in that the fastening means (20, 21, 54, 55) are designed as snap fasteners.

9. Holding device according to one of the preceding claims, characterized in that the fastening means (20, 21, 54, 55) are designed as clamping members (26) which are open on one side.

10. Holding device according to one of the preceding claims, characterized in that the receiving element together with the carrier elements and the supporting elements are bent in one piece from the same resilient material, the bending being done in such a manner that essentially only parts of the receiving element and of the carrier elements are elastically deformed in order to install or remove the holding device or to elastically change the spacing between the fastening means.

## Revendications

1. Dispositif de retenue, en particulier porte-vêtements, présentant un élément de réception (13, 50) qui présente au moins un moyen de réception d'au moins une pièce de vêtement ou similaire, et présentant de préférence deux éléments d'appui (18, 19; 52, 53) à chacun desquels est associé un moyen de fixation (20, 21; 54, 55) configuré pour être fixé de manière libérable à l'un des supports d'appuie-tête (23, 56) de sièges (11) du véhicule en vue du montage du dispositif de retenue (10, 49), caractérisé en ce que le dispositif de retenue (10, 49) présente des propriétés élastiques telles qu'il peut être adapté à différentes distances des supports d'appuie-tête (23, 56) par modification de l'écart entre les moyens de fixation (20, 21; 54, 55).

2. Dispositif de retenue selon la revendication 1, caractérisé en ce qu'au moins un élément de support (14) est associé à l'élément de réception (13, 50), pour former le moyen de réception d'au moins une pièce de vêtement, et le ou chaque élément de support (14) est de préférence configuré d'une seule pièce avec l'élément de réception (13).

3. Dispositif de retenue selon l'une des revendications précédentes, caractérisé en ce qu'au moins l'élément de réception (13) et/ou les éléments d'appui (18, 19, 52, 53) sont élastiques.

4. Dispositif de retenue selon l'une des revendications précédentes, caractérisé en ce que dans la position non serrée, l'écart entre les éléments d'appui (18, 19, 52, 53) dans la région des moyens de fixation (20, 21, 54, 55) est plus grand ou plus petit que la distance entre les supports d'appuie-tête (23, 56).

5. Dispositif de retenue selon l'une des revendications précédentes, caractérisé en ce que les moyens de fixation (20, 21, 54, 55) peuvent être fixés aux supports d'appuie-tête (23, 56) par une force élastique.

6. Dispositif de retenue selon l'une des revendications précédentes, caractérisé en ce que les éléments d'appui (18,19) et/ou les éléments de fixation (20, 21) peuvent être adaptés à différentes distances entre les supports d'appuie-tête (23), en particulier par l'action élastique de l'élément de réception (13).

7. Dispositif de retenue selon l'une des revendications précédentes, caractérisé en ce que les moyens de fixation (54, 55) peuvent être tournés au moins en partie.

8. Dispositif de retenue selon l'une des revendications précédentes, caractérisé en ce que les moyens de fixation (20, 21, 54, 55) sont configurés comme fermetures à accrochage élastique.

9. Dispositif de retenue selon l'une des revendications précédentes, caractérisé en ce que les moyens de fixation (20, 21, 54, 55) sont configurés comme organes de serrage (26) ouverts d'un côté.

10. Dispositif de retenue selon l'une des revendications précédentes, caractérisé en ce que les éléments d'appui ainsi que l'élément de réception doté des éléments de support, ainsi que sont cintrés d'une seule pièce en le même matériau élastique, le cintrage s'effectuant de telle sorte qu'essentiellement seules des parties de l'élément de réception ou des éléments de support se déforment élastiquement pour le montage ou le démontage du dispositif de retenue ou pour la modification élastique de l'écart entre les moyens de fixation.
